# EUROPEAN PATENT APPLICATION

(11) **EP 1 126 703 A2**
(43) Date of publication of application: **22.08.2001**
(21) Application number: 01103023.6
(22) Date of filing: 08.02.2001
(51) Int. Cl.: H04N 5/74

(54) **Multi-display device**

(30) Priority: 10.02.2000 JP 2000033780
(71) Applicant: Olympus Optical Co., Ltd., Tokyo (JP)
(72) Inventor: Kubota, Akihiro,, c/oOlympus Optical Co.,Ltd., Hachioji-shi, Tokyo (JP); Sugimoto, Yukihiro, c/oOlympus Optical Co.,Ltd., Hachioji-shi, Tokyo (JP)
(74) Representative: Winter, Brandl, Fürniss, Hübner, Röss, Kaiser, Polte Partnerschaft

(57) **Abstract**

A multi-display device displays a single image constituted by a plurality of projection images (1 to 4) projected by a plurality of image projection units (31 to 34) on a screen (5) in which the device has a shifting unit (8) for shifting a picture signal which is supplied to the image projecting unit (31 to 34) toward a time-base direction in accordance with a width of an overlapped portion of images (1 to 4) mutually adjacent in a vertical scanning direction.

## Description

The present invention relates to a multi-display device for displaying a single image constituted by a plurality of projection images projected on a screen and, in particular, a seamless multi-display device in which a plurality of projection images projected on a screen have their mutually adjacent areas overlapped.

In the multi-display device, a single image is displayed by projecting a plurality of images on a screen and it is important that there occurs no display shift at the upper/lower and right/left edges (seams) of these projection images.

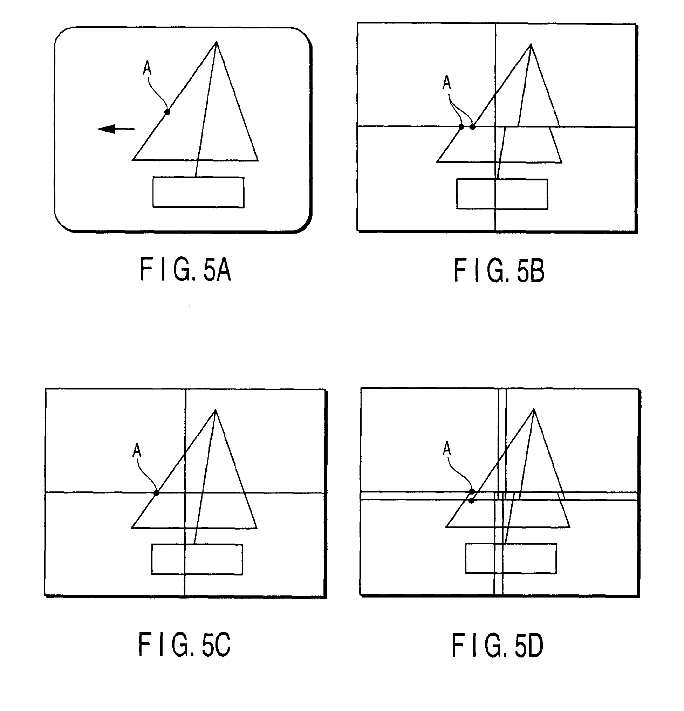

Now, a consideration will be given to the case that, as shown in FIG. 5A for instance, an object is moved in an arrow-indicated direction. And let it be assumed that the image is displayed as a four-divided (2×2) array, that is, as right, left, upper and lower image sections. If, in the scanning of a picture signal corresponding to one frame, the scanning of the upper-half image and that of the lower-half image are done in parallel form, then there occurs a problem of a display shift between the seam of the upper- and lower-half image sections as indicated by A in FIG. 5B. This problem arises because there is a time difference corresponding to one vertical period at the displays of the upper and lower image seam portions. This display shift becomes prominent as the moving speed of the object is faster. It is to be noted that, even at the seam of the right and left images, a similar phenomenon occurs with respect to the up/down movement of the object, but that, in this case, the shift is as small as one horizontal period and present no greater visual problem.

Against the above-mentioned problem, a proposal is made to relatively delay a picture signal of a lower-side image by one vertical period behind a picture signal of an upper-side image (for example, JPN PAT APPLN KOKAI PUBLICATION NO. 5-78232). By setting a time difference corresponding to one vertical period in this way it is possible to eliminate the discontinuity at the seam of the upper- and lower-side images as shown in FIG. 5C.

In the case where the image areas are not overlapped at their upper/lower and right/left seams, it is possible to eliminate a display shift at the seams by setting a time difference corresponding to one vertical period as set out above. In the case where the seam of the images is displayed in overlapped form, a time difference occurs at the overlapped portion even if a time difference corresponding to one vertical period is set, and there occurs a problem of a display shift at the seams as shown in FIG. 5D.

It is accordingly the object of the present invention to provide a multi-display device for displaying an image with the seam of the adjacent projection images overlapped, which can eliminate a display shift at the seam of the adjacent images.

According to the present invention there is provided a multi-display device for displaying a single image constituted of a plurality of images (projection images) projected by a plurality of image projecting means on a screen, in which the device has a shifting means for shifting a picture signal which is supplied to the image projecting means toward a time-base direction in accordance with the width of an overlapped portion of images mutually adjacent in a vertical scanning direction.

In the above-mentioned multi-display device, the shift amount of the above-mentioned picture signal is preferably obtained based on the information relating to the width of the overlapped portion detected by taking a shot of a whole image projected on the screen.

The multi-display device further has a plurality of storing means for storing picture signals supplied to the above-mentioned image projecting means, the number of the storing means being preferably at least equal to or greater than the number of the image projecting means.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram showing a seamless multi-display device according to a first embodiment of the present invention;
FIG. 2 is a timing chart for explaining a practical operation of the first embodiment of the present invention;
FIG. 3 is a block diagram showing a practical structure of a seamless multi-display device according to a second embodiment of the present invention;
FIGS. 4A and 4B are timing charts for explaining a practical operation of the second embodiment of the present invention; and
FIGS. 5A to 5D are explanatory views showing a problem encountered in the prior art technique.

The embodiment of the present invention will be described below with reference to the accompanying drawing.

### <First Embodiment>

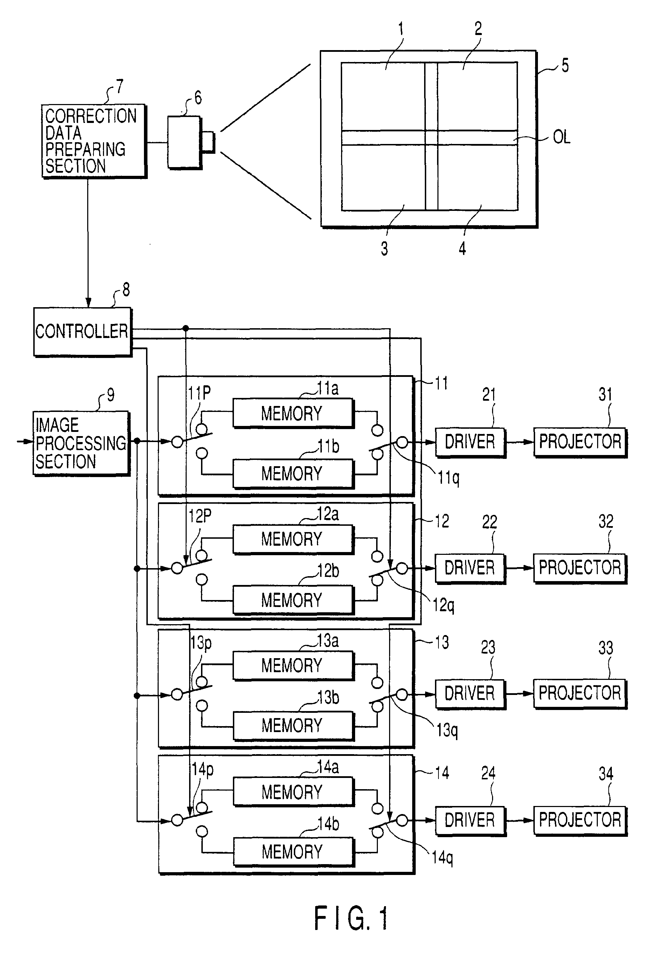

FIG. 1 shows a block diagram showing a practical structure of a seamless multi-display device according to a first embodiment of the present invention.

In this embodiment, one image constituted by images (projection images) 1 to 4 projected by four projectors (liquid crystal projectors) on a screen 5 is displayed as four projection images 1 to 4 with their adjacent edges (seams) overlapped. The width of the overlapped portion OL of the adjacent images is obtained by taking a whole reference image projected on the screen 5 by means of a digital camera 6 and performing calculation processing on the thus taken information by a correction data preparing section 7, such as a personal computer.

The information relating to the width of the overlapped portion OL obtained at the correction data preparing section 7 is sent to a controller 8 such as a CPU. The controller 8 finds a time shift amount (a time-base shift amount) based on the information when a picture (video) signal (a picture signal subjected by an image processing section 9 to predetermined image processing) is sent to each projector.

The output of the image processing section 9 is inputted to a plurality of storage sections 11 to 14. These storage sections 11 to 14 correspond to the projection images 1 to 4 projected on the screen 5. The picture signals inputted to the storage sections 11 to 14 are shifted based on control signals from the controller 8. The storage sections 11 to 14 are of a 2-bank configuration type having first memories (having at least one frame storage capacity of the corresponding projection images 1 to 4) lla to 14a and second memories (having at least one frame storage capacity corresponding to the projection images 1 to 4) 11b to 14b. The controller 8 switches the connection states of the first memories lla to 14a and second memories 11b to 14b by controlling switches 11p to 14p and switches 11q to 14q by control signals.

The outputs of the storage sections 11 to 14 are connected to corresponding drivers 21 to 24. Upon receipt of the signals of the drivers 21 to 24, corresponding projectors 31 to 34 project corresponding projection images 1 to 4 on the screen 5.

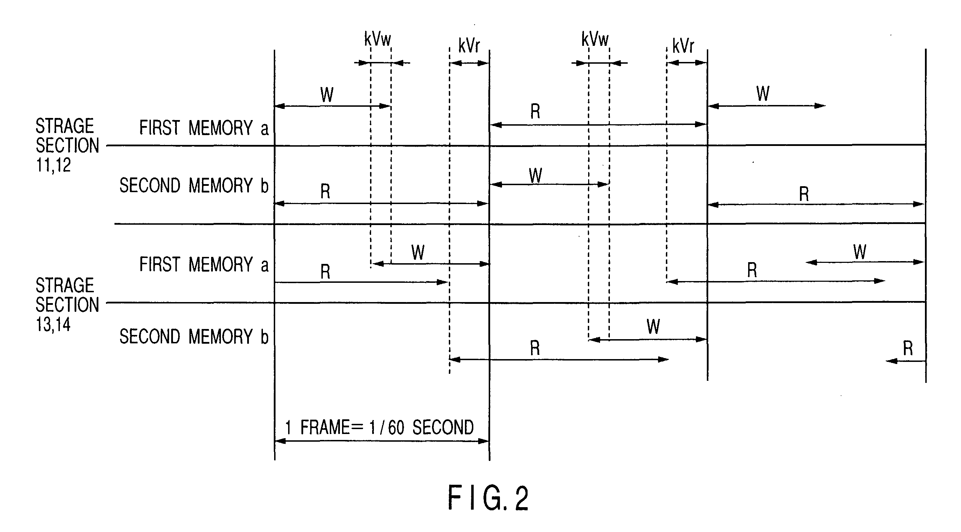

The operation of this embodiment will be described below with reference to the timing chart shown in FIG. 2. The timing chart of FIG. 2 shows the operations (operations in a vertical scanning direction) of the first memories a (lla to 14a) and second memories b (11b to 14b) of the storage sections 11 to 14, noting that a write operation period is indicated by W and a read operation period by R.

The picture signal inputted to the device of FIG. 1 is subjected by the image processing section 9 to color separation, geometric conversion, shading correction, etc., and these processed picture signals are inputted to the storage sections 11 to 14.

The upper half of the screen 5 are constituted by the projection images 1 and 2 and, at the storage sections 11 and 12, the data of the picture signal is written line by line in that order of the first memory lla, first memory 12a, first memory lla, first memory 12a, ···. At the second memories, on the other hand, the data of the picture signal stored before one frame is read out line by line in that order of the second memory 11b, second memory 12b, second memory 11b, second memory 12b, ···. The data thus read out are sequentially sent to the drivers 21 and 22. Upon receipt of the signals from the drivers 21 and 22, the projectors 31 and 32 project the projection images 1 and 2 on the screen 5.

Upon the completion of an operation corresponding to one frame (1/60 second), the next sequential one frame operation is carried out. At this frame, on the other hand, in a way reversed to the previous frame, the first memories lla and 12a are used for read-out and the second memories 11b and 12b for write-in purpose and, in the same way as set out above, the write operation and read operation are carried out. After this, in the same way as shown in FIG. 2, the first memories and second memories are write (W)-and read(R)-operated alternately for each corresponding frame.

At the storage sections 13 and 14, on the other hand, read- and write-operations are carried out, as in the same way as the operations of the storage sections 11 and 12, in accordance with a time shift amount of the picture signal initially obtained at the controller 8. The time shift amount is calculated based on the information relating to the width of the overlapped portion OL obtained at the correction data preparing section 7.

The width of the overlapped portion OL is initially found by projecting the reference image on the screen 5, taking the projected whole image by the digital camera 6 and calculation-processing by the correlation data preparing section 7 on the correlation of the respective image taken. This method is set out in JPN PAT APPLN KOKAI PUBLICATION NO. 6-141246 in more detail. Further, it may be possible to simultaneously make the geometric correction of a lens aberration, projector's tilt, etc. (for a detail, reference should be made to JPN PAT APPLN KOKAI PUBLICATION NO. 9-326981). By doing so, it is not necessary to use any expensive lens and to enhance the accuracy with which the projectors are set and it is possible to obtain a low cost.

By doing so, the width of the overlapped portion OL is found and the time shift amount is found based on the width of the overlapped portion OL. With N (for example, N=600) representing the whole number of vertical-direction pixels of the respective projectors 31 to 34, kN (for example, kN=60) the number of pixels of the overlapped section, V one-vertical scanning period, the time shift amount becomes (1-k) V (for example, 0.9V) and the time width of the overlapped portion becomes kV (for example, 0.1V). At the storage section 13 (first memory 13a and second memory 13b) and storage section 14 (first memory 14a and second memory 14b), the write-and read-operations are performed at a timing in which the picture signal is time-shifted by (1-k) V.

Thus, at the storage sections 13 and 14, the write-and read-operations are performed at a timing delayed by (1-k) V behind the storage sections 11 and 12. Further, signals are supplied to the drivers 23, 24 and projectors 33 and 34 at a (1-k) V-delayed timing. As a result, it is possible to make a seamless image display at the adjacent seam, that is, at the overlapped portion OL of the mutually adjacent vertical-direction images on the screen 5.

It is to be noted that, as shown in FIG. 2, the read period R is double the length the write period W. This is because the write-operation is performed at, for example, 1/60 second with respect to the single whole image (projection images 1 to 4) while, on the other hand, the read-operation is performed at, for example, 1/60 second with respect to each of the projection images 1 to 4. As shown in FIG. 2, therefore, the period of the overlapped portion is kVw for the write period and kVr for the read period, and is different in time length.

According to this invention, the write period and read period of the picture signal are shifted and, by doing so, the picture signal of the lower-side image is relatively delayed by a (1-k) V period behind the picture signal of the upper-side image to allow the scanning of the overlapped portion of the mutually adjacent vertical-direction images to be matched. As a result, for the case of a moving subject, it is possible to eliminate an image shift at an overlapped portion of the adjacent vertical-direction images.

### <Second Embodiment>

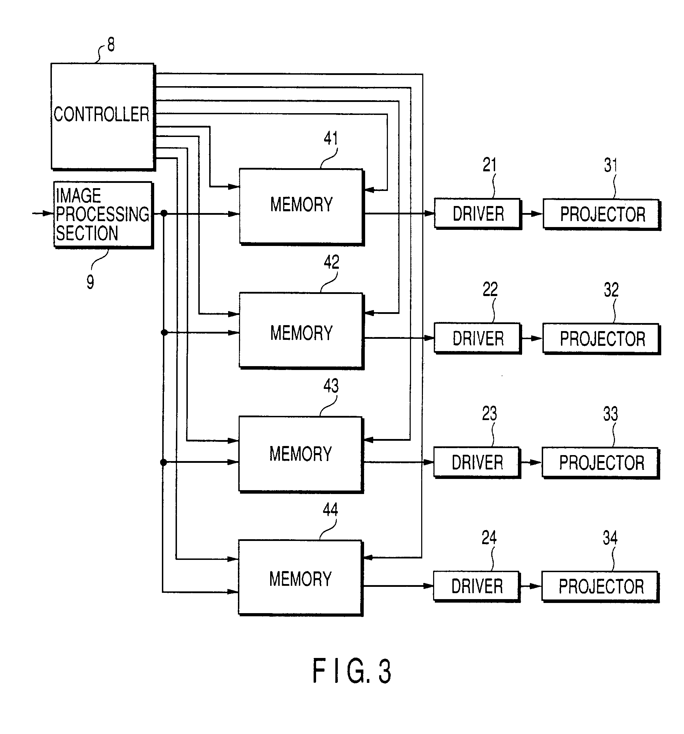

FIG. 3 is a block diagram showing a practical structure of a seamless multi-display device according to a second embodiment of this invention. In this embodiment, the same reference numerals are employed to designate parts or elements corresponding to those shown in the first embodiment of FIG. 1 and any further explanation of them is omitted for brevity sake.

In this embodiment, like the first embodiment, a single image constituted by images (projection images) projected by four projectors (liquid crystal projectors) on a screen, not shown, is displayed as the projection images with their edge (seam) portion of the mutually adjacent images overlapped. In the same way as the first embodiment, first, a whole reference image projected on the screen is taken by a digital camera, not shown, the width of the overlapped portion is found by a correction data preparing section, not shown, from the taken information, and the time shift amount of a picture signal is found by a controller 8 on the basis of the information relating to the width of the overlapped portion.

In this embodiment, storage sections 41 to 44 store picture signals outputted from an image processing section 9 and these sections are different in their structure from the storage sections 11 to 14 of the first embodiment. Although, in the first embodiment, the storage sections 11 to 14 have been explained as being of a two-bank configuration having the first memories lla to 14a and second memories 11b to 14b and the storage capacity of the respective memories as requiring one frame of the respective projection images 1 to 4, the second embodiment is such that the storage sections 41 to 44 are not configured as shown in the first embodiment and need only to have at least a storage capacitance corresponding to one line of the respective projection image.

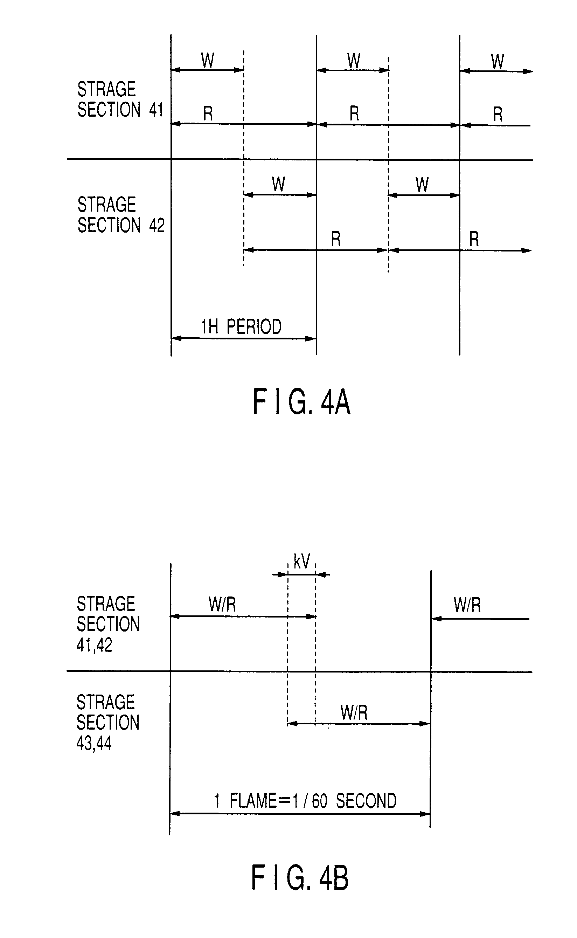

Now the operation of the second embodiment will be explained below with reference to a timing chart shown in FIG. 4. FIG. 4A shows the operations of the storage sections 41 and 42 in a horizontal scanning direction and FIG. 4B shows the operations of the storage sections 41 to 44 in a vertical scanning direction.

A picture signal inputted to the device of FIG. 3 is subjected by an image processing section 9 to color separation, geometric conversion, shading correction, etc., and these processed picture signals are inputted to the storage sections 41 to 44.

The upper half of the screen 5 is constituted by two projection images, right and left, and, of an image signal corresponding to one line, a first-half picture signal is written into the storage section 41 and a second-half picture signal is written into the storage section 42. Although, in the first embodiment, the picture signal written into the storage section has been explained as being read out at the next frame, the second embodiment is such that picture signals written into the storage sections 41 and 42 are read out immediately after the write-operation. That is, as shown in FIG. 4A, a picture signal corresponding to the first half of one line starts to be read immediately after being written into the storage section 41 and a picture signal corresponding to a second half of one line starts to be read immediately after being written into the storage section 42. The read operation is done at a rate corresponding to the operation speed of the projector 31, etc. and the read rate is equal to or over 1/2 of the write rate.

After this, in the same way as set out above, the picture signal is sequentially written into the storage section 41 and 42 and the picture signals written into the storage sections 41 and 42 are sequentially read out. The thus read-out data are sequentially sent to drivers 21 and 22 and, upon receipt of the signals from the drivers 21 and 22, images are projected by the projectors 31 and 32 onto the screen.

When the write-/read-operations relative to the storage sections 41 and 42 proceed to an overlapped portion, then the write-/read-operations relative to the storage sections 43 and 44 start as shown in FIG. 4B. That is, as in the same way as the above-mentioned storage sections 41 and 42, write-and read-operations are performed in accordance with a time shift amount of a picture signal initially found at a controller 8. The time shift amount is found as in the first embodiment.

With N (for example, N=600) representing the whole number of vertical-direction pixels of the respective projectors 31 to 34, kN (for example, kN=60) the number of pixels at the overlapped portion and V one vertical scanning period, the time shift amount becomes (1-k) V (for example, 0.9V) and the time width of the overlapped portion becomes kV (for example, 0.1V).

Thus, at the storage sections 43 and 44, write-and read-operations are done at a timing in which the picture signal is time-shifted by (1-k) V and signals are supplied to the projectors 33 and 34 at a (1-k) V-delayed timing. As a result, as in the first embodiment, it is possible to eliminate the seam of those images mutually adjacent in a vertical direction of the screen, that is, the shift of the image at the overlapped portion. According to this invention it is also possible to advantageously lower the memory capacity of the storage sections 41 to 44.

Although, in the above-mentioned respective embodiment, correction processing has been explained as being performed only in connection with the vertical-direction overlapped portion because the horizontal overlapped portion of the adjacent images presents no greater visual problem, correction processing may also be performed in connection with the horizontal-direction overlapped portion. Although, in the above-mentioned embodiment, a single image has been explained as being divided into four projection images, it is possible to properly vary the number of projection images divided.

As set out above, according to the present invention, the picture signals are time-shifted in accordance with the width of the overlapped portion of the mutually adjacent images, so that it is possible to eliminate a display shift at the overlapped portion of the adjacent images.

## Claims

1. A multi-display device for displaying a single image constituted by a plurality of projection images (1 to 4) projected by a plurality of image projecting means (31 to 34) on a screen (5), wherein the device has a shifting means (8) for shifting a picture signal which is supplied to the image projecting means (31 to 34) toward a time-base direction in accordance with a width of an overlapped portion of images (1 to 4) mutually adjacent in a vertical scanning direction.

2. A multi-display device according to claim 1, characterized in that a shift amount of the picture signal is obtained based on information relating to the width of the overlapped portion detected by taking a shot of a whole image projected on the screen (5).

3. A multi-display device according to claim 1, further having a plurality of storing means (lla to 14a, 11b to 14b, 41 to 44) for storing picture signals supplied to the image projecting means (31 to 34), wherein the number of the storing means (lla to 14a, 11b to 14b, 41 to 44) is at least equal to or greater than that of the image projecting means (31 to 34).
